# EUROPEAN PATENT APPLICATION

(11) **EP 1 860 881 A2**
(43) Date of publication of application: **28.11.2007**
(21) Application number: 07108787.8
(22) Date of filing: 23.05.2007
(51) Int. Cl.: H04N 7/173, H04N 5/445

(54) **Broadcasting system and method of processing channel information in broadcasting system**

(30) Priority: 24.05.2006 KR 20060046656
(71) Applicant: LG Electronics Inc., Seoul, 150-721 (KR)
(72) Inventor: Yun, Chang Sik, DAEJEON 306-824 (KR); Lee, Byoung Ho, SEOUL 151-815 (KR)
(74) Representative: Cabinet Plasseraud

(57) **Abstract**

An apparatus and method for processing channel information in a broadcasting system for transmitting/receiving a cable broadcasting signal are disclosed. In particular, each receiver transmits host channel view capacity information containing the length of channel information which can be displayed on a screen to a headend located at a remote place, and the headend stores the host channel view capacity information in a database and determines and transmits most suitable channel information of each receiver to each receiver. Accordingly, each receiver can display only channel information, which can be most accurately recognized by viewers, among a variety of the channel information which can be displayed on the screen.

## Description

This application claims the benefit of Korean Patent Application No. 10-2006-0046656, filed on May 24, 2006, which is hereby incorporated by reference as if fully set forth herein.

### BACKGROUND OF THE INVENTION

### Field of the Invention

The present invention relates to a broadcasting system for transmitting/receiving a cable broadcasting signal and a method of processing channel information in the broadcasting system.

### Discussion of the Related Art

A cable broadcasting system, which is one of many broadcasting systems, includes a cable broadcasting station, which is a transmitter side for transmitting a cable broadcasting signal, and a broadcasting receiver for receiving the transmitted cable broadcasting signal. The cable broadcasting station is also called a headend.

For example, the broadcasting receiver for receiving the cable broadcasting signal adopts an open cable type in which a cablecard including a conditional access (CA) is separated from a body. The cablecard uses, for example, a PCMCIA card. The cablecard is configured to be detachably assembled to a body slot of the broadcasting receiver and may be called a POD (point of deployment) module. The body into which the cablecard is inserted is called a host. For example, a digital built-in television set or a digital ready television set corresponds to the host, and the cablecard and the host configure the broadcasting receiver.

The headend transmits a variety of information, containing channel information, to broadcasting receivers.

At this time, the broadcasting receivers are different in a method of displaying channel information on a screen and length of the channel information, that is, the capacity of the channel information, according to manufacturers or the models of the same manufacturer.

However, since the headend cannot check the statuses of the broadcasting receivers, the headend unilaterally transmits channel information having a constant length to all the broadcasting receivers.

Accordingly, some of the broadcasting receivers cannot properly display the channel information on its screen.

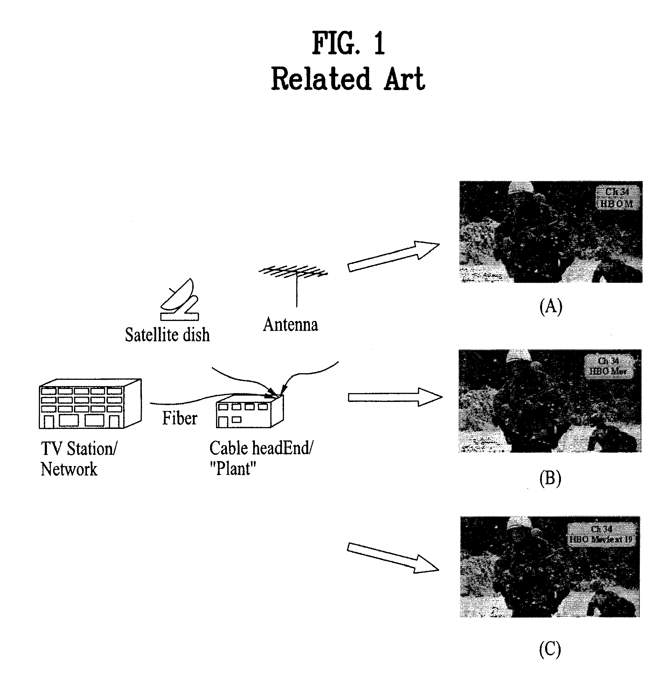

For example, assuming that the headend transmits channel information 'HBO Movie at 1970', the broadcasting receiver shown in FIG. 1(A) displays only 'HBO M', the broadcasting receiver shown in FIG. 1(B) displays only 'HBO Mov', the broadcasting receiver shown in FIG. 1(C) shows only 'HBO Movie at 19', and the remaining portions thereof may not be displayed. In FIG. 1(A), since only 'HBO M' is displayed, viewers cannot know whether 'M' indicates movie or music. In FIG. 1(C), since '70' is deleted, it is difficult to determine that accurate channel information is provided to viewers.

Since the channel information containing a long channel name is unilaterally transmitted to all the broadcasting receivers without considering the statuses of the broadcasting receivers, some of the broadcasting receivers may not display a portion of the channel information on its screen. In particular, when only the portion of the channel information is displayed, it is difficult to understand the meaning of the channel information.

In such a case, since the channel information of a channel which is being displayed is not accurately recognized by the viewers, viewers are uncomfortable.

### SUMMARY OF THE INVENTION

Accordingly, the present invention is directed to a broadcasting system for transmitting/receiving a cable broadcasting signal and a method of processing channel information in the broadcasting system that substantially obviate one or more problems due to limitations and disadvantages of the related art.

An object of the present invention is to provide a bi-directional broadcasting system having a bi-directional function for allowing a broadcasting receiver to effectively display channel information on its screen.

Another object of the present invention is to provide a broadcasting system for allowing a headend to transmit channel information suitable for each broadcasting receiver and a method of processing channel information.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a reception system may include a host and a card. The host may collect host channel view capacity information containing the length of channel information which can be displayed on a screen. The card may transmit the host channel view capacity information collected by the host to a headend located at a remote place.

In another aspect of the present invention, a broadcasting system may include a receiver and a headend. The receiver may include a host and a card. The host of the receiver may collect host channel view capacity information containing the length of channel information which can be displayed on a screen. The card of the receiver may transmit the host channel view capacity information collected by the host to a headend located at a remote place. The headend may determine the length of the channel information to be transmitted to the receiver by referring to the host channel view capacity information received from the receiver, and transmit the channel information having the determined length to the receiver.

In another aspect of the present invention, a method of processing channel information may include, at a receiver for processing a broadcasting signal and channel information received from a headend located at a remote place, transmitting host channel view capacity information containing the length of the channel information which can be displayed on a screen of the receiver to the headend; and, at the headend, determining the length of the channel information to be transmitted to the receiver by referring to the host channel view capacity information, and transmitting the channel information having the determined length to the receiver.

In another aspect of the present invention, a method of processing channel information of a card in a reception system including the card and a host may include transmitting diagnostic request information containing diagnostic ID of host channel view capacity information to the host; and receiving the host channel view capacity information collected and transmitted by the host according to the diagnostic request information and transmitting the host channel view capacity information to a headend located at a remote place.

In another aspect of the present invention, a method of processing channel information of a host in a reception system including a card and the host may include collecting host channel view capacity information containing the length of the channel information which can be displayed on a screen when a diagnostic ID of diagnostic request information requested by the card indicates the host channel view capacity information; and transmitting the collected host channel view capacity information to the card.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGs. 1(A) to 1(C) are views showing examples of conventional broadcasting receivers which cannot accurately display channel information;

FIG. 2 is a conceptual diagram of a cable broadcasting network including a host and a cablecard according to the present invention;

FIG. 3 is a flowchart showing a method of processing channel information according to an embodiment of the present invention;

FIGs. 4(A) to 4(C) are views showing examples of broadcasting receivers according to the present invention which can accurately display channel information;

FIG. 5 is a conceptual diagram showing an example of a method of transmitting a diagnostic request and confirmation between a cablecard and a host according to the present invention;

FIGs. 6A and 6B are views showing examples of allocating a diagnostic ID in order to diagnose host channel view capacity information according to the present invention;

FIG. 7A and 7B are views showing the syntax structure of diagnostic information collected and transmitted when a diagnostic request is received in an S-mode;

FIGs. 8A and 8B are views showing the syntax structure of diagnostic information collected and transmitted when a diagnostic request is received in an M-mode;

FIG. 9 is a view showing an example of the diagnostic syntax structure of host channel view capacity information according to the present invention;

FIG. 10 is a flowchart showing a method of requesting and transmitting host channel view capacity information using a diagnostic function according to an embodiment of the present invention; and

FIG. 11 is a block diagram showing a broadcasting receiver for receiving a cable broadcasting signal according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

In the present invention, broadcasting receivers for receiving a cable broadcasting signal provide their host channel view capacity information to a headend, and the headend transmits channel information suitable for the broadcasting receivers by referring to the host channel view capacity information.

In the present invention, the host channel view capacity information contains maximum length information of channel information which can be displayed on a screen of each of the broadcasting receivers. The channel information contains a channel name.

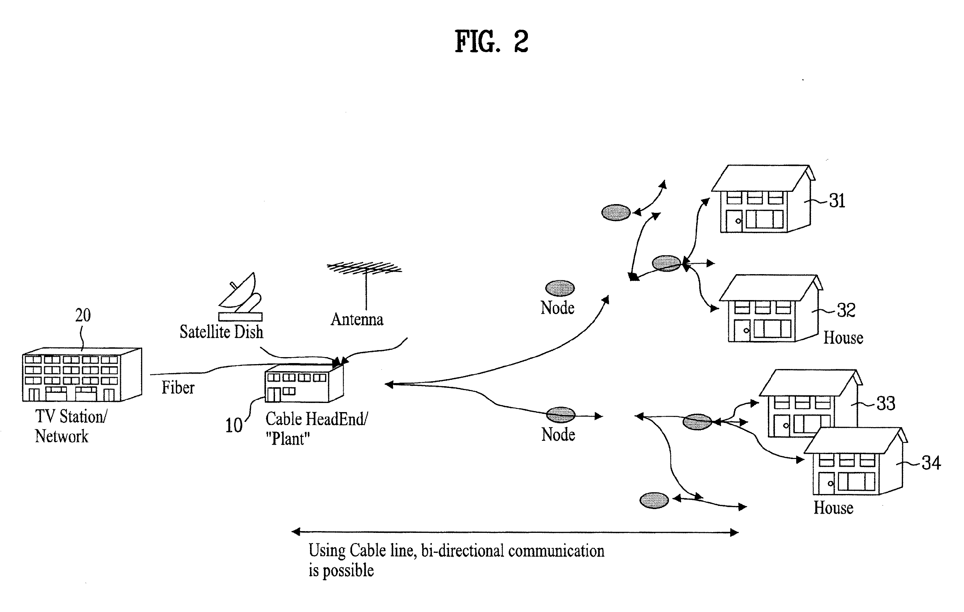

FIG. 2 is a conceptual diagram of a cable broadcasting network among a headend and broadcasting receivers according to the present invention. The headend/plant 10 receives a broadcasting signal from a television broadcasting station 20 via a variety of communication networks and transmits the broadcasting signal to the broadcasting receivers 31 to 34 via a cable network including nodes. The broadcasting receivers and the headend/plant exchange data via a cable network infrastructure for bi-directionally transmitting data.

Cablecards in broadcasting receivers request host channel view capacity information to a host and the host transmits the host channel view capacity information containing maximum length information of channel information which can be displayed on a screen according to the request. The cablecard transmits the host channel view capacity information received from the host to a headend.

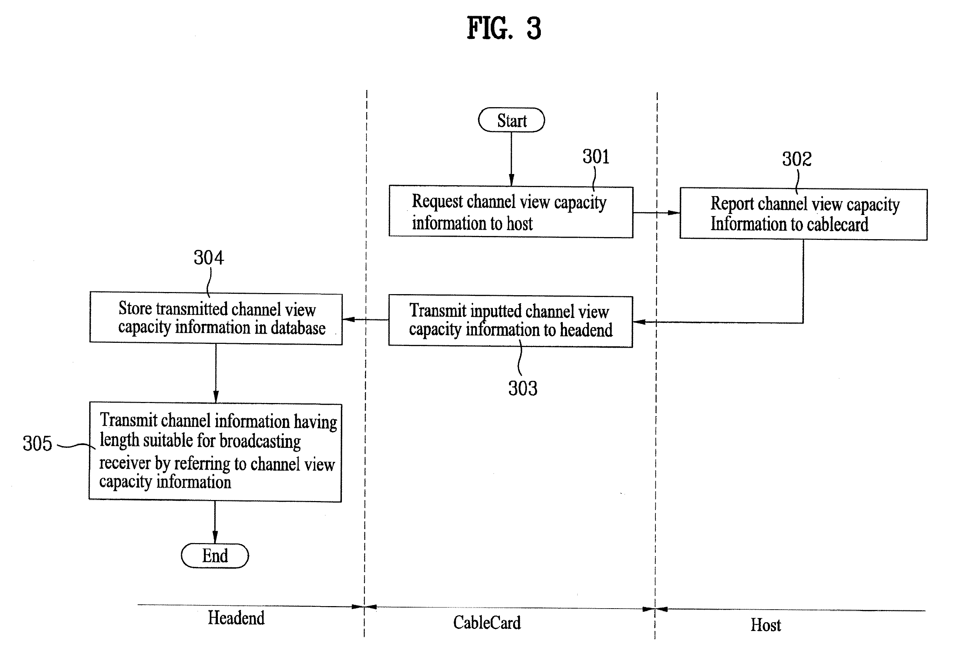

FIG. 3 is a flowchart showing a method of processing channel information according to an embodiment of the present invention. The cablecards request host channel view capacity information to the host (step 301). The hosts reports the host channel view capacity information containing maximum length information of channel information which can be displayed on their screen to the cablecards (step 302). The cablecards transmit the host channel view capacity information of the host to the headend (step 303).

Whenever the host channel view capacity information of each of the hosts is received from each of the cablecards, the headend stores the host channel view capacity information in a database (DB), together with an identification (ID) of the cablecard (step 304).

When the channel information is transmitted to each of the broadcasting receivers, the channel information suitable for each of the broadcasting receivers is generated and transmitted by referring to the host channel view capacity information of each of the broadcasting receivers, which is stored in the database (step 305).

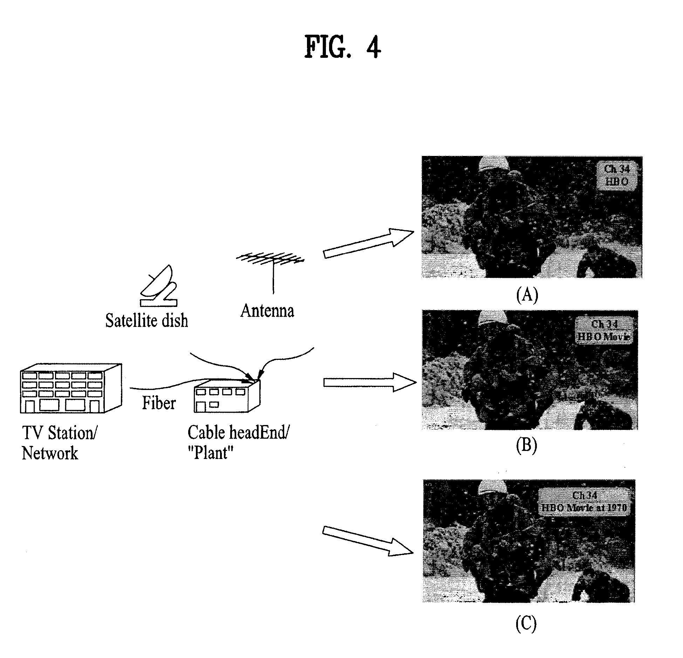

For example, when the host channel view capacity information stored in the database is referred, it is assumed that the maximum length value of the channel information which can be displayed on the screen of the broadcasting receiver shown in FIG. 4 (A) is 5 (including alphanumeric characters), the maximum length value of the channel information which can be displayed on the screen of the broadcasting receiver shown in FIG. 4 (B) is 11, and the maximum length value of the channel information which can be displayed on the screen of the broadcasting receiver shown in FIG. 4 (C) is 20. It is assumed that the channel information which will be transmitted by the headend is 'HBO Movie at 1970'.

The headend contains only 'HBO' in the channel information to be transmitted to the broadcasting receiver shown in FIG. 4(A), contains only 'HBO Movie' in the channel information to be transmitted to the broadcasting receiver shown in FIG. 4(B), and contains 'HBO Movie at 1970' in the channel information to be transmitted to the broadcasting receiver shown in FIG. 4(C). The 'HBO Movie' of the channel information can be more accurately recognized by users, compared with the 'HBO M', 'HBO Mv' and 'HBO Movie a'.

The headend determines the channel information having the length of the channel information, which can be accurately recognized, within the maximum length value of the channel information contained in the host channel view capacity information of each of the broadcasting receivers.

Accordingly, the broadcasting receiver shown in FIG. 4(A) displays only the 'HBO' of the channel information, the broadcasting receiver shown in FIG. 4(B) displays only the 'HBO Movie" of the channel information, and the broadcasting receiver shown in FIG. 4(C) displays the 'HBO Movie at 1970' of the channel information.

According to an embodiment of the present invention, the cablecard requests the host channel view capacity information and the host sends the host channel view capacity information, using a diagnostic function.

That is, the cable broadcasting standard has a diagnostic function for monitoring the statuses of the hosts. The diagnostic function checks the operation statuses of the hosts and the connection statuses of the peripheral devices.

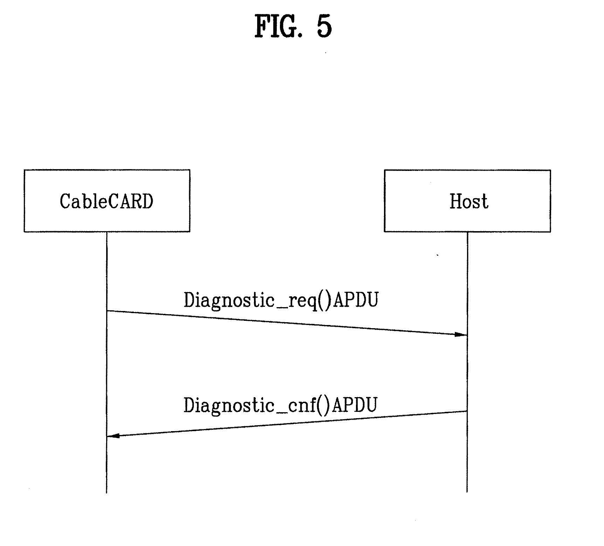

FIG. 5 is a conceptual diagram showing an example of diagnosing the status of the host when the cablecard receives a diagnostic command for the status of the host, in which the cablecard is mounted, from the headend or a user.

The cablecard receives the diagnostic command for the status of the host connected with the cable card from the headend or the user and transmits the diagnostic command to the host according to a predetermined protocol. The host which receives the diagnostic command from the cablecard collects its status diagnostic information and transmits the collected status diagnostic information to the cablecard according to a predetermined protocol.

At this time, the predetermined protocol is a generic diagnostic protocol in an open cable. The generic diagnostic protocol is defined to allow a local place (user side) or a remote place (headend side) to monitor a variety of status information about devices associated with a variety of system information of the host in real time. According to this protocol, the cablecard transmits the diagnostic command to the host by a diagnostic request protocol and the host transmits the confirmation of the diagnostic command by a diagnostic confirmation protocol.

That is, the diagnostic request is contained in a diagnostic_req () APDU (Application Protocol Data Unit) and the diagnostic confirmation is contained in a diagnostic_cnf() APDU. The APDU is the unit of data which is exchanged between application entities in an application layer. For example, the diagnostic information is requested and the diagnostic information collected according to the request is sent on a data channel which is one a CPU interface between the cablecard and the host, through the exchange of the diagnostic_req() APDU and the diagnostic_cnf() APDU.

At this time, when the cablecard transmits the diagnostic request, the host can check the type of the diagnostic request and collect and report the diagnostic information corresponding to the diagnostic request to the cablecard.

Accordingly, the cable broadcasting standard defines the types of the diagnostic information which can be requested to the host and a diagnostic identification ID is allocated to the diagnostic information.

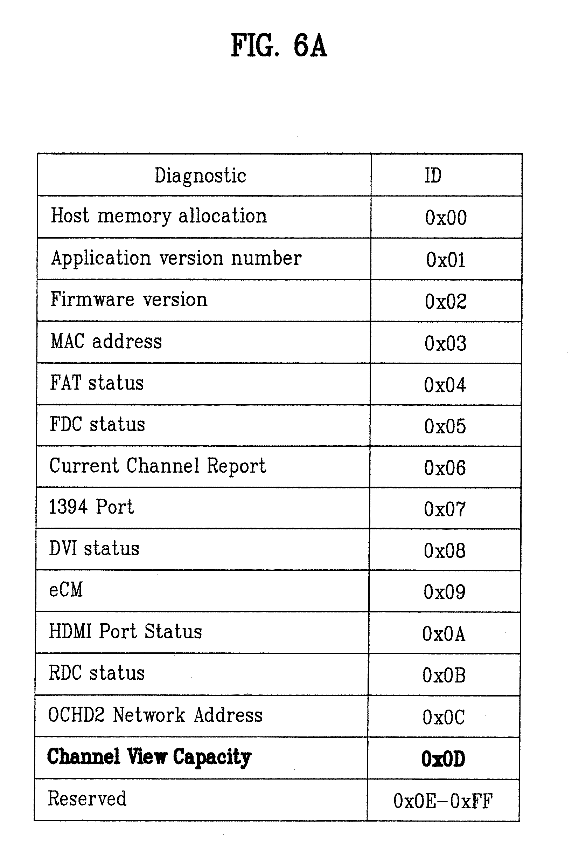

According to the embodiment of the present invention, 0x0D is allocated to the diagnostic ID for diagnosing the host channel view capacity information in a format in which the types of the diagnostic information and the diagnostic IDs corresponding thereto are defined as shown in FIG. 6A. This corresponds to one embodiment of the present invention and any one of 0x0E to 0xFF may be allocated to the diagnostic ID of the host channel view capacity information.

That is, if the cablecard transmits the diagnostic request to the host and the diagnostic ID is 0x0D, it is indicated that the host reports its host channel view capacity information to the cablecard.

In FIG. 6A, it is indicated that DVI_status information is reported to the cablecard if the diagnostic ID is 0x08, the status of a high definition multimedia interface (HDMI) port is reported to the cablecard if the diagnostic ID is 0x0A, and a variety of other diagnostic information (eCM, RDC status, OCHD 2 network address) may be used as the diagnostic ID.

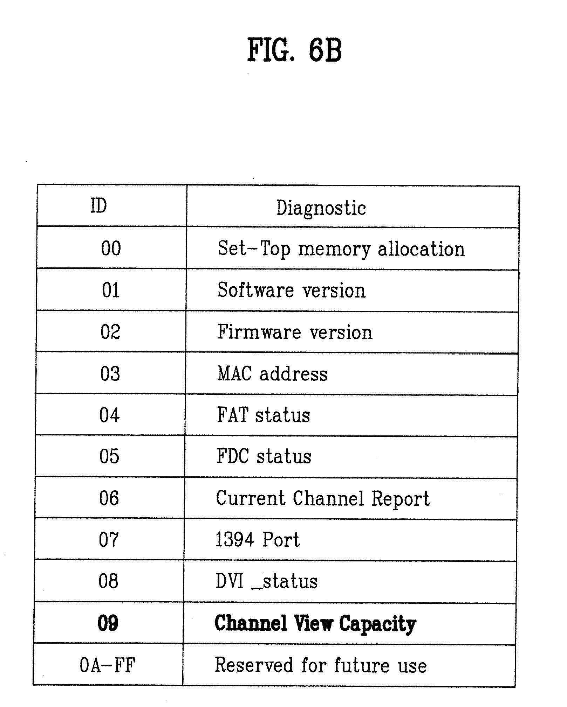

According to another embodiment of the present invention, 0x09 is allocated to the diagnostic ID for diagnosing the host channel view capacity information in a format in which the types of the diagnostic information and the diagnostic IDs corresponding thereto are defined as shown in FIG. 6B. This is one embodiment of the present invention and any one of OxOA to OxFF may be allocated to the diagnostic ID of the host channel view capacity information.

Meanwhile, an interface between the cablecard and the host is a single stream cablecard interface or a multi-stream cablecard interface.

The single stream cablecard interface allows the cablecard to process one broadcasting stream and allows the host to decode the broadcasting stream. In contrast, the multi-stream cablecard interface allows the cablecard to process a plurality of multiplexed broadcasting streams and allows the host to decode the plurality of broadcasting streams.

Hereinafter, a case where the cablecard processes a single stream (hereinafter, referred to as an "S-mode") and a case where the cablecard processes a multi-stream (hereinafter, referred to as an "M-mode") will be described.

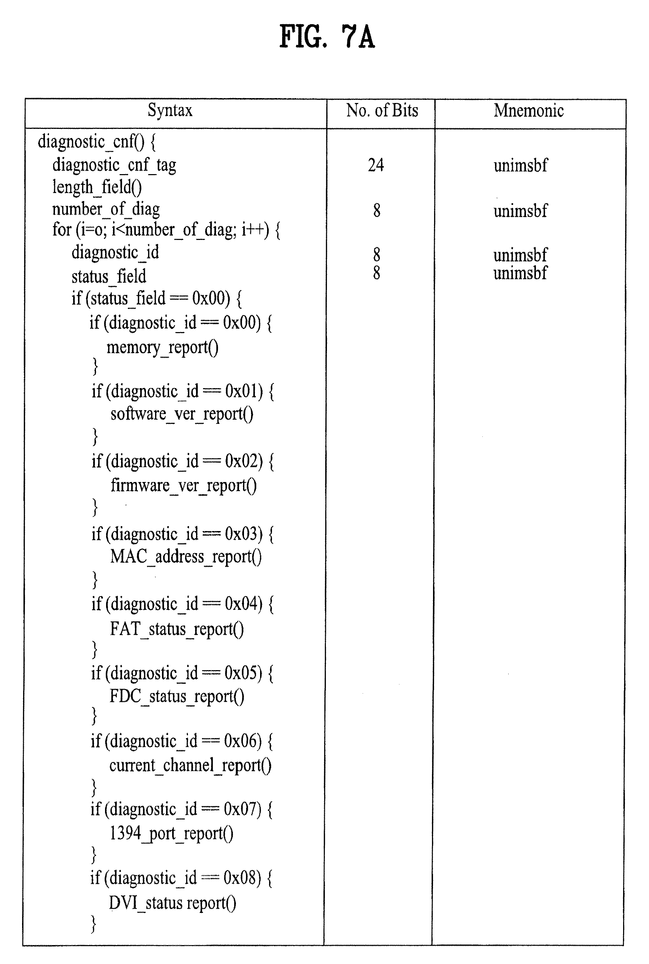

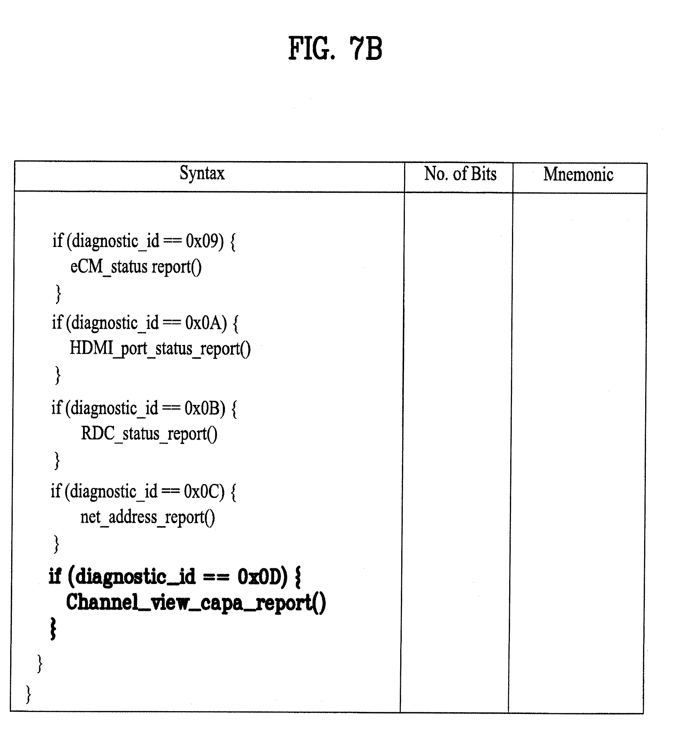

FIG. 7A and 7B are views showing examples of the syntax structure of an S-mode diagnostic confirmation protocol for allowing the host to transmit the diagnostic confirmation "diagnostic_cnf () APDU" to the cablecard when the cablecard transmits the diagnostic request "diagnostic-req () APDU" to the host according to the format in which the types of the diagnostic information and the diagnostic IDs are defined as shown in FIG. 6A.

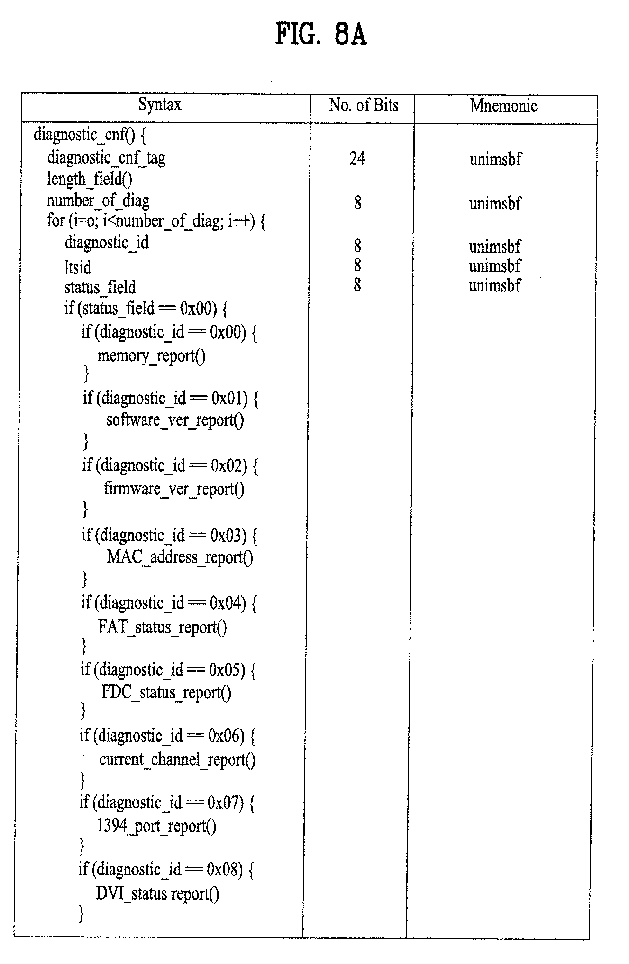

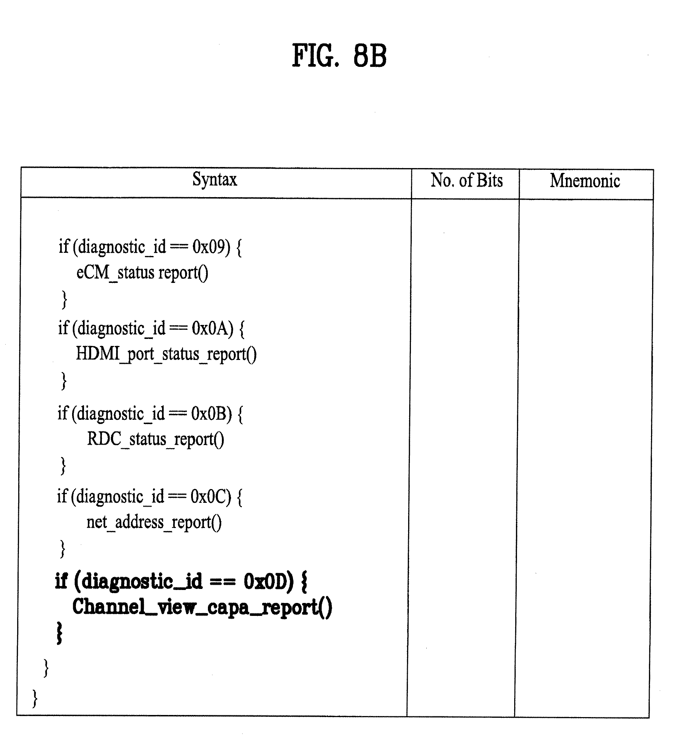

FIGs. 8A and 8B are views showing examples of the syntax structure of an M-mode diagnostic confirmation protocol for allowing the host to transmit the diagnostic confirmation "diagnostic_cnf () APDU" to the cablecard when the cablecard transmits the diagnostic request "diagnostic_req() APDU" to the host according to the format in which the types of the diagnostic information and the diagnostic IDs are defined as shown in FIG. 6A.

The syntaxes shown in FIGs. 8A and 8B are different from those shown in FIGs. 7A and 8B in that the ID (ltsid) of each of a plurality of multiplexed streams is declared.

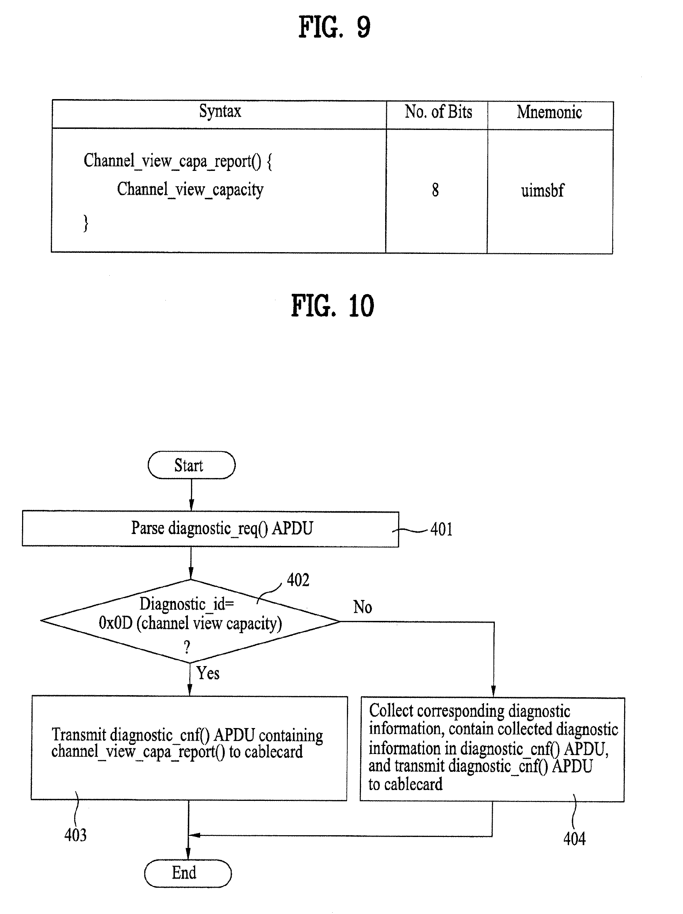

FIG. 10 shows the operation of the host for parsing, collecting, and transmitting the diagnostic request to the cablecard when the diagnostic request is received from the cablecard.

That is, the host parses the diagnostic request "diagnostic_req() APDU" received from the cablecard (step 401), and inserts its host channel view capacity information "host_channel_view_capa_report()" in the diagnostic_cnf() APDU and transmits the inserted diagnostic_cnf() APDU if the value of the diagnostic ID is 0x0D (step 403). If the diagnostic ID is not 0x0D in the step 402, the method progresses to a step 404 of collecting and containing the diagnostic information corresponding to the diagnostic ID in the diagnostic_cnf() APDU and transmitting the diagnostic_cnf() APDU to the cablecard.

FIG. 9 is a view showing an example of the syntax structure of the host_channel_view_capa_report () according to the present invention. The syntax shown in FIG. 9 contains an 8-bit channel_view_capacity field.

The channel view capacity field contains the length of the channel information of the host, that is, information about the length of the channel name which can be displayed. That is, the host channel view capacity field contains maximum length information of the channel name which can be displayed on the screen of the host.

Meanwhile, when the host transmits the diagnostic_cnf() APDU shown in FIG. 7A, 7B, 8A, or 8B to the cablecard, the cablecard performs a host_channel_view_capa_report() object contained in a conditional statement "if the diagnostic ID is 0x0D". Then, the host channel view capacity information can be obtained and transmitted to the headend. That is, the cablecard can transmit the maximum length information of the channel name written according to the diagnostic confirmation protocol received from the host to the headend.

Then, the headend stores the host channel view capacity information received from each of the cablecards, that is, the maximum length information of the channel name which can be displayed on the screen, in the DB, determines the channel information containing the channel name having a length suitable for each of the broadcasting receivers by referring to the information stored in the database, and transmits the determined channel information to each of broadcasting receivers.

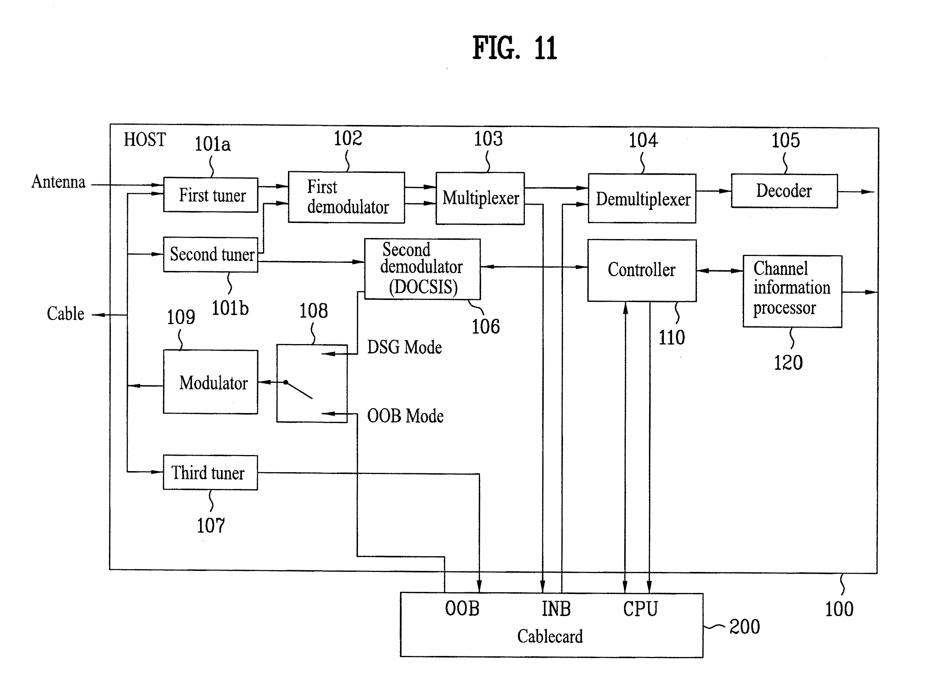

FIG. 11 is a block diagram showing a broadcasting receiver according to an embodiment of the present invention. The broadcasting receiver includes a host 100 and a cablecard 200 which is configured to be detachably assembled to the host.

The host 100 can receive only a cable broadcasting signal or at least one of a cable broadcasting signal, a terrestrial broadcasting signal and a satellite broadcasting signal. In the present embodiment, the host 100 can receive at least one of the cable broadcasting signal, the terrestrial broadcasting signal and the satellite broadcasting signal.

Meanwhile, a bi-directional communication method between the broadcasting receiver and the headend may include an out-of-band (OOB) mode and a DOCSIS settop gateway (DSG) mode. Accordingly, a viewer can select and view a desired program via the host using any one of the two modes. Alternatively, the viewer can directly participate in a broadcasting program or select and view necessary information. A data broadcasting service can be provided using the OOB mode and the DSG mode.

The OOB mode is the standard of transport specifications between a cable broadcasting station (headend) and an intersec instrument within a settop box. In contrast, the DSG mode indicates a transport mode between a cable modem control system of a cable broadcasting station and a data-over-cable service interface specifications (DOCSIS)-based cable modem within a settop box. At this time, the DOCSIS can transmit data using the cable modem.

The broadcasting receiver shown in FIG. 11 is a cable broadcast receiver using a combination of the OOB mode and the DSG mode.

The host of the digital broadcast receiver shown in FIG. 11 includes a first tuner 101a, a second tuner 101b, a first demodulator 102, a multiplexer 103, a demultiplexer 104, a decoder 105, a second demodulator (DOCSIS) 106, a third tuner 107, a switching unit 108, a modulator 109, a controller 110, and a channel information processor 120.

The cablecard 200 is one of a single (S)-card for processing a single stream and a multi (M)-card for processing a multi-stream.

The first tuner 101a tunes only a specific channel frequency of a cable audio/video (A/V) broadcasting signal transmitted in-band via a cable or a terrestrial A/V broadcasting signal transmitted via an antenna, and outputs the tuned signal to the first modulator 102.

The terrestrial broadcasting signal and the cable broadcasting signal are different from each other in a transport method. The first demodulator 102 can perform different demodulating methods with respect to different signals. For example, the terrestrial A/V broadcasting signal may be modulated by a Vestigial Sideband Modulation (VSB) method and the cable A/V broadcasting signal may be modulated by a Quadrature Amplitude Modulation (QAM) method. In this case, the first demodulator 102 demodulates the tuned signal by the VSB method or the QAM method according to a signal selected by the first tuner 101a.

The signal demodulated by the first demodulator 102 is multiplexed by the multiplexer 103 to output a stream. At this time, if a plurality of in-band tuners for receiving the cable A/V broadcasting signal is included and different channels are simultaneously tuned by the in-band tuners and are demodulated by respective demodulators to output a multi-stream, the multi-stream is multiplexed by the multiplexer 103 to output the multiplexed signal.

If the signal demodulated by the first demodulator 102 is the stream of the terrestrial broadcasting signal, the demodulated stream is output to the demultiplexer 104 via the multiplexer 103. In contrast, if the signal demodulated by the first demodulator 102 is the stream of the cable broadcasting signal, the demodulated stream is output to the demultiplexer 104 via the multiplexer 103 and the cablecard 200 mounted in a slot. The cablecard 200 includes a conditional access (CA) system for preventing illegal copy of higher value-added broadcasting contents and restricting access to the contents and is also called point of deployment (POD).

That is, if the single stream or the multi-stream of the cable broadcasting signal output from the multiplexer 103 is scrambled, the cablecard 200 descrambles the single stream or the multi-stream and outputs the descrambled stream to the demultiplexer 104. If the cablecard 200 is not mounted, the signal stream or the multi-stream of the cable broadcasting signal demodulated by the first demodulator 102 is directly output to the demultiplexer 104. In this case, since the scrambled cable signal is not descrambled, the signal is not normally displayed on the screen.

The demultiplexer 104 receives the broadcasting signal, demultiplexes the received broadcasting signal into audio, video, and data streams, and outputs the streams to the demodulator 105. The decoder 105 may include an audio decoder, a video decoder, and a data decoder.

That is, the audio stream demultiplexed by the demultiplexer 104 is decoded by the audio decoder, the video stream is decoded by the video decoder, and the data stream is decoded by the data decoder.

The second tuner 101b tunes a specific channel frequency of the data broadcasting signal transmitted via the cable in the DSG mode and outputs the tuned signal to the second demodulator 106. The second demodulator 106 demodulates the data broadcasting signal of the DSG mode and outputs the demodulated broadcasting signal to the controller 110.

The third tuner 107 tunes a specific channel frequency of a downlink data broadcasting signal transmitted via the cable in the OOB mode and outputs the tuned signal to the cablecard 200.

If bi-directional communication between the headend and the broadcasting receiver is possible, uplink information (e.g. pay program application, diagnostic information of the host, or the like) transmitted from the broadcasting receiver to the headend may be transmitted in the OOB mode or the DSG mode. Accordingly, the host may include the switching unit 108 so as to select any one of the modes and transmit the information.

In the OOB mode, user information or system diagnostic information is output to the modulator 109 via the cablecard 200 and the switching unit 108, and the modulator 109 modulates the output signal using a Quadrature Phase Shift Keying (QPSK) modulation method and transmits the modulated signal to the headend via the cable. In the DSG mode, user information or system diagnostic information is output to the modulator 109 via the controller 110, and the switching unit 108 is modulated by the modulator 109 using a QAM-16 modulation method to be transmitted to the headend via the cable.

Meanwhile, the cablecard 200 may transmit the diagnostic request "diagnostic_req() APDU" containing a desired diagnostic ID to the controller 110 of the host 100. Then, the controller 110 collects diagnostic information corresponding to the diagnostic ID and transmits the diagnostic confirmation "diagnostic_cnf () APDU" containing the collected diagnostic information to the cablecard 200.

At this time, if the diagnostic ID requested by the cablecard 200 is 0x0D, the channel information processor 120 of the host 100 outputs the host channel view capacity information, that is, the host channel view capacity information containing the maximum length information of the channel name which can be displayed on the screen, under the control of the controller 110 of the host 100. The controller 110 contains the host channel view capacity information in the diagnostic confirmation "diagnostic_cnf () APDU" and transmits the diagnostic confirmation "diagnostic_cnf () APDU" to the cablecard 200. At this time, the channel information processor 120 may be included in the controller 110 and outside the controller 110 as shown in FIG. 11.

The cablecard 200 parses the diagnostic_cnf() APDU received from the controller 110 of the host 100, obtains the host channel view capacity information of the host, and transmits the host channel view capacity information to the headend via the switching unit 108 and the modulator 109.

The headend stores the host channel view capacity information in the DB while being classified according to the cablecards and determines the channel information containing the channel name having a length suitable for each of the broadcasting receivers. The headend transmits the determined channel information to each of the broadcasting receivers.

The host of each of the broadcasting receivers may receive the channel information transmitted by the headend via the cablecard and directly receive the channel information from the headend. The received channel information is displayed on the screen as shown in FIGs. 4A to 4C, if necessary.

According to one embodiment of the present invention, the headend transmits the channel information according to a source name subtable format. In such a case, the channel information is transmitted to the host via the cablecard and the channel information transmitted to the host via the controller 110 and the channel information processor 120 of the host is parsed from the source name subtable format.

According to the present invention, the cablecard provides the host channel view capacity information of the host to the headend, and the headend stores the host channel view capacity information in the DB and transmits most suitable channel information within the maximum length value of the channel information which can be displayed on the screen to the broadcasting receivers while being classified according to the broadcasting receivers. Accordingly, each of the broadcasting receivers displays only the channel information, which can be accurately recognized by the viewer, of the channel information which can be displayed on the screen, thereby providing the accurate channel information to the viewer.

The generic diagnostic protocol described up to now is an example of the transport protocol for implementing the present invention and the present invention is not limited to this protocol. In the present invention, when the diagnostic information is transmitted using the diagnostic information transport protocol defined in a variety of cable broadcasting protocols, the compatibility of a broadcasting receiver and a method of transmitting diagnostic information using the protocols can be obtained. Accordingly, a method of transmitting status diagnostic information using the generic diagnostic protocol may be used as a suitable example.

The diagnostic function of the present invention which is used to transmit the host channel view capacity information to the headend is applicable to a digital broadcasting system for performing bi-directional communication, such as a terrestrial broadcasting system, a satellite broadcasting system, or an internet protocol television (IPTV) system, as well as a cable broadcasting system. At this time, in the satellite broadcasting system, a smart card may be used instead of the cablecard. In such a case, an interface module for interfacing with an external device may be included in the system or outside the system.

Instead of a hardware conditional access system (CAS) which is separately mounted in the broadcasting receiver, that is, a settop box or an integral type television of a subscriber, a CAS function can be performed by downloading a software CAS in a settop box or an integral type television of a subscriber.

A method of downloading the software CAS may be performed by automatically downloading a CA image from the headend when a security processor which is previously mounted in the settop box is connected to a network.

According to the broadcasting system and the method of processing the channel information of the present invention, each broadcasting receiver which can receive the cable broadcasting signal transmits its host channel view capacity information, that is, information containing the maximum length of the channel information which can be displayed on the screen, to the headend, and the headend transmits the channel information containing the channel name having a length suitable for each broadcasting receiver by referring to the host channel view capacity information.

Accordingly, the viewer of each broadcasting receiver can more accurately recognize the information about the channel, which is being displayed, using the accurate channel information.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A reception system comprising:
a host which collects host channel view capacity information containing the length of channel information which can be displayed on a screen; and
a card which transmits the host channel view capacity information collected by the host to a headend located at a remote place.

2. The reception system according to claim 1, wherein the card is a single cablecard which can receive and process a single stream.

3. The reception system according to claim 1, wherein the card is a multi-cablecard which can receive and process a multi-stream.

4. The reception system according to claim 1, wherein the host channel view capacity information contains maximum length information of the channel information which can be displayed on the screen of the host.

5. The reception system according to claim 1, wherein the card transmits diagnostic request information containing a diagnostic identification (ID) of the host channel view capacity information to the host.

6. The reception system according to claim 5, wherein the host collects the host channel view capacity information containing the length of the channel information which can be displayed on the screen and transmits the host channel view capacity information to the card, when the diagnostic ID of the transmitted diagnostic request information indicates the host channel view capacity information.

7. A broadcasting system comprising:
a receiver which collects host channel view capacity information containing the length of channel information which can be displayed on a screen and transmits the host channel view capacity information to a headend located at a remote place; and
a headend which determines the length of the channel information to be transmitted to the receiver by referring to the host channel view capacity information received from the receiver, and transmits the channel information having the determined length to the receiver.

8. The broadcasting system according to claim 7, wherein the headend stores the host channel view capacity information received from the receiver in a database while being classified according to receivers and determines the length of the channel information of each of the receivers by referring to the host channel view capacity information stored in the database.

9. The broadcasting system according to claim 7, wherein the host channel view capacity information contains maximum length information of the channel information which can be displayed on the screen of the receiver.

10. The broadcasting system according to claim 9, wherein the channel information which can be displayed on the screen contains a channel name.

11. The broadcasting system according to claim 9, wherein the headend determines a length smaller than or equal to a maximum length of the channel information in the host channel view capacity information as the length of the channel information of the receiver.

12. The broadcasting system according to claim 7, wherein the receiver comprises:
a host which collects the host channel view capacity information containing the length of the channel information which can be displayed on the screen; and
a card which transmits the host channel view capacity information collected by the host to a headend located at a remote place.

13. The broadcasting system according to claim 12, wherein the host parses the channel information received from the headend and displays the channel information on the screen.

14. The broadcasting system according to claim 12, wherein the card requests the host channel view capacity information to the host and transmits the host channel view capacity information to the headend located at the remote place when receiving the host channel view capacity information from the host.

15. The broadcasting system according to claim 14, wherein the card transmits diagnostic request information containing a diagnostic ID of the host channel view capacity information to the host, and the host collects the host channel view capacity information containing the length of the channel information which can be displayed on the screen and transmits the host channel view capacity information to the card when the diagnostic ID of the diagnostic request information requested by the card indicates the host channel view capacity information.

16. The broadcasting system according to claim 12, wherein the headend stores the host channel view capacity information received from the card in a database while being classified according to receivers and determines the length of the channel information of each of the receivers by referring to the host channel view capacity information stored in the database.

17. A method of processing channel information, the method comprising:
at a receiver for processing a broadcasting signal and channel information received from a headend located at a remote place, transmitting host channel view capacity information containing the length of the channel information which can be displayed on a screen of the receiver to the headend; and
at the headend, determining the length of the channel information to be transmitted to the receiver by referring to the host channel view capacity information, and transmitting the channel information having the determined length to the receiver.

18. The method according to claim 17, wherein the transmitting of the host channel view capacity information comprises:
requesting the host channel view capacity information to a host; and
transmitting the host channel view capacity information to the headend located at the remote place when the host channel view capacity information is received from the host.

19. The method according to claim 17, wherein the requesting of the host channel view capacity information comprises requesting the host channel view capacity information to the host using a diagnostic function.

20. The method according to claim 17, further comprising, at the host, collecting the host channel view capacity information containing the length of the channel information which can be displayed on the screen and providing the host channel view capacity information to a source.

21. The method according to claim 17, wherein the transmitting of the channel information comprises storing the host channel view capacity information received from the receiver while being classified according to receivers and determining the length of the channel information of each of the receivers by referring to the host channel view capacity information stored in the database.

22. The method according to claim 17, wherein the host channel view capacity information contains maximum length information of the channel information which can be displayed on the screen of the receiver.

23. The method according to claim 22, wherein the channel information which can be displayed on the screen contains a channel name.

24. The method according to claim 22, wherein the transmitting of the channel information comprises determining a length smaller than or equal to a maximum length of the channel information in the host channel view capacity information as the length of the channel information of the receiver.

25. A method of processing channel information of a card in a reception system including the card and a host, the method comprising:
transmitting diagnostic request information containing diagnostic ID of host channel view capacity information to the host; and
receiving the host channel view capacity information collected and transmitted by the host according to the diagnostic request information and transmitting the host channel view capacity information to a headend located at a remote place.

26. A method of processing channel information of a host in a reception system including a card and the host, the method comprising:
collecting host channel view capacity information containing the length of the channel information which can be displayed on a screen when a diagnostic ID of diagnostic request information requested by the card indicates the host channel view capacity information; and
transmitting the collected host channel view capacity information to the card.
